# EUROPEAN PATENT APPLICATION

(11) **EP 4 283 973 A1**
(43) Date of publication of application: **29.11.2023**
(21) Application number: 21922495.3
(22) Date of filing: 25.11.2021
(51) Int. Cl.: H04N 5/232

(54) **IMAGE BRIGHTNESS ADJUSTMENT METHOD AND APPARATUS, AND ELECTRONIC DEVICE AND MEDIUM**

(30) Priority: 28.01.2021 CN 202110120697
(71) Applicant: BEIJING BYTEDANCE NETWORK TECHNOLOGY CO., LTD., Beijing 100041 (CN)
(72) Inventor: JI, Jingyu, Beijing 100086 (CN)
(74) Representative: Dentons UK and Middle East LLP
(86) International application number: PCT/CN2021/133201
(87) International publication number: WO 2022/160905

(57) **Abstract**

Embodiments of the present disclosure provide a method and apparatus for adjusting image brightness, an electronic device, and a medium. The method includes: obtaining a first image to be adjusted; dividing the first image into a plurality of image portions; for a first image portion of the plurality of image portions, determining a brightness adjustment strategy based on brightness of the first image portion and performing brightness adjustment on the first image portion based on the brightness adjustment strategy, to obtain a second image portion; and obtaining a second image by replacing the first image portion with the second image portion in the first image. The embodiments of the present disclosure realize the brightness adjustment on the first image portion according to the brightness of the first image portion in the image, improving image quality of the first image portion and ensuring that image quality of image portions in the image other than the first image portion remains unchanged, thus ensuring quality of the image as a whole and improving user experience.

## Description

### CROSS-REFERENCE TO RELATED APPLICATIONS

The present application claims a priority to the Chinese Patent Application No. 202110120697.6, titled "METHOD AND APPARATUS FOR ADJUSTING IMAGE BRIGHTNESS, ELECTRONIC DEVICE, AND MEDIUM" filed with the China National Intellectual Property Administration on January 28, 2021, the entire content of which is hereby incorporated by reference.

### FIELD

The present disclosure relates to the field of image processing technologies, and more particularly, to a method and apparatus for adjusting image brightness, an electronic device, and a medium.

### BACKGROUND

With the continuous development of computer technology, more and more electronic devices have been equipped with the function of obtaining an image. A user may take pictures anytime and anywhere using an electronic device having a photographing function to get an image desired by the user, and may also obtain the image the user wants from the network.

Generally, brightness of the image is unevenly distributed, with some regions of the image being brighter and some regions of the image being less bright, so the user needs to adjust the brightness of the obtained image. In the related art, when the brightness adjustment is performed on the image, the brightness of the image as a whole is reduced or increased. When the brightness of the image as a whole is reduced, a part of the image with low brightness is prone to be dimmed, resulting in poor quality of this part of the image; when the brightness of the image as a whole is increased, a part of the image with high brightness is prone to be brightened, resulting in poor quality of this part of the image. In other words, when the brightness of the image as a whole is reduced or increased, image quality of a partial image region is reduced, causing poorer quality of the image.

### SUMMARY

The present disclosure provides a method and apparatus for adjusting image brightness, an electronic device, and a medium, capable of solving at least one of the above technical problems.

According to a first aspect of the present disclosure, provided is a method for adjusting image brightness. The method includes: obtaining a first image to be adjusted; dividing the first image into a plurality of image portions; for a first image portion of the plurality of image portions, determining a brightness adjustment strategy based on brightness of the first image portion and performing brightness adjustment on the first image portion in accordance with the brightness adjustment strategy, to obtain a second image portion; and obtaining a second image by replacing, in the first image, the first image portion with the second image portion.

According to a second aspect of the present disclosure, provided is an apparatus for adjusting image brightness. The apparatus includes: an obtaining module configured to obtain a first image to be adjusted; a dividing module configured to divide the first image into a plurality of image portions; an adjustment module configured to determine, for a first image portion of the plurality of image portions, a brightness adjustment strategy based on brightness of the first image portion and perform brightness adjustment on the first image portion based on the brightness adjustment strategy, to obtain a second image portion; and a replacement module configured to obtain a second image by replacing, in the first image, the first image portion with the second image portion.

According to a third aspect of the present disclosure, an electronic device is provided. The electronic device includes one or more processors, a memory, and one or more applications. The one or more applications are stored in the memory and configured to be executed by the one or more processors to perform operations corresponding to the method for adjusting image brightness as illustrated in the first aspect of the present disclosure.

According to a fourth aspect of the present disclosure, a computer-readable medium is provided. The computer-readable medium has a computer program stored thereon. The computer program, when executed by a processor, performs the method for adjusting image brightness as illustrated in the first aspect of the present disclosure.

Technical solutions of the present disclosure can provide the following advantageous effects.

The present disclosure provides a method and apparatus for adjusting image brightness, an electronic device, and a medium. Compared with the related art, in the present disclosure, the first image is first divided into the plurality of image portions; for the first image portion of the plurality of image portions, the brightness adjustment strategy is determined based on the brightness of the first image portion and the brightness adjustment is performed on the first image portion based on the brightness adjustment strategy, to obtain the second image portion; and then the second image is obtained by replacing, in the first image, the first image portion with the second image portion. As such, the brightness adjustment performed on the first image portion is realized based on the brightness of the first image portion in the image, which improves image quality of the first image portion and ensures that image quality of image portions in the image other than the first image portion remains unchanged, thereby ensuring quality of the image as a whole and improving user experience.

### BRIEF DESCRIPTION OF THE DRAWINGS

The above and other features, advantages, and aspects of embodiments of the present disclosure will become more apparent with reference to the following detailed description in conjunction with the accompanying drawings. Throughout the drawings, same or similar reference signs represent same or similar elements. It should be understood that the drawings are illustrative, and elements and components are not necessarily drawn to scale.
FIG. 1 is a schematic flowchart illustrating a method for adjusting image brightness according to an embodiment of the present disclosure;
FIG. 2 is a schematic diagram of splicing image portions according to an embodiment of the present disclosure;
FIG. 3 is a structural schematic diagram of an apparatus for adjusting image brightness according to an embodiment of the present disclosure; and
FIG. 4 is a structural schematic diagram of an electronic device according to an embodiment of the present disclosure.

### DESCRIPTION OF EMBODIMENTS

Embodiments of the present disclosure will be described in detail below with reference to the accompanying drawings. While some embodiments of the present disclosure are illustrated in the drawings, it should be understood that the present disclosure may be embodied in various forms and should not be construed as being limited to the embodiments set forth herein. Instead, these embodiments are provided for a complete and thorough understanding of the present disclosure. It should be understood that the drawings and the embodiments of the present disclosure are for illustration purposes only and are not intended to limit the scope of the present disclosure.

It should be understood that respective steps recited in embodiments of the method of the present disclosure may be performed in a different order, and/or performed in parallel. Moreover, the embodiments of the method may include additional steps and/or omit performing the illustrated steps. The scope of the present disclosure is not limited in this respect.

The term "including" and variations thereof as used herein are open-ended, i.e., "including, but not limited to". The term "based on" means "based at least in part on". The term "one embodiment" means "at least one embodiment"; the term "another embodiment" means "at least one additional embodiment"; and the term "some embodiments" means "at least some embodiments". Relevant definitions for other terms will be given in the following description.

It should be noted that concepts such as "first" and "second" mentioned in the present disclosure are only used to distinguish apparatuses, modules or units, and are neither used to limit that these apparatuses, modules or units are definitely different apparatuses, modules or units, nor used to limit a sequence or interdependence of functions performed by these apparatuses, modules or units.

It should be noted that terms "a", "an", or "plurality of" in the present disclosure are illustrative rather than limiting, which shall be construed as "one or more" by those skilled in the art, unless clearly indicated otherwise.

The names of messages or information exchanged between apparatuses in the embodiments of the present disclosure are for illustrative purposes only, and are not intended to limit the scope of the messages or information.

The following describes the technical solutions of the present disclosure and the way to solve the above technical problems in detail with specific embodiments. These specific embodiments may be combined with each other below, and details of the same or similar concepts or processes may not be elaborated in some embodiments. The embodiments of the present disclosure will be described below with reference to the accompanying drawings.

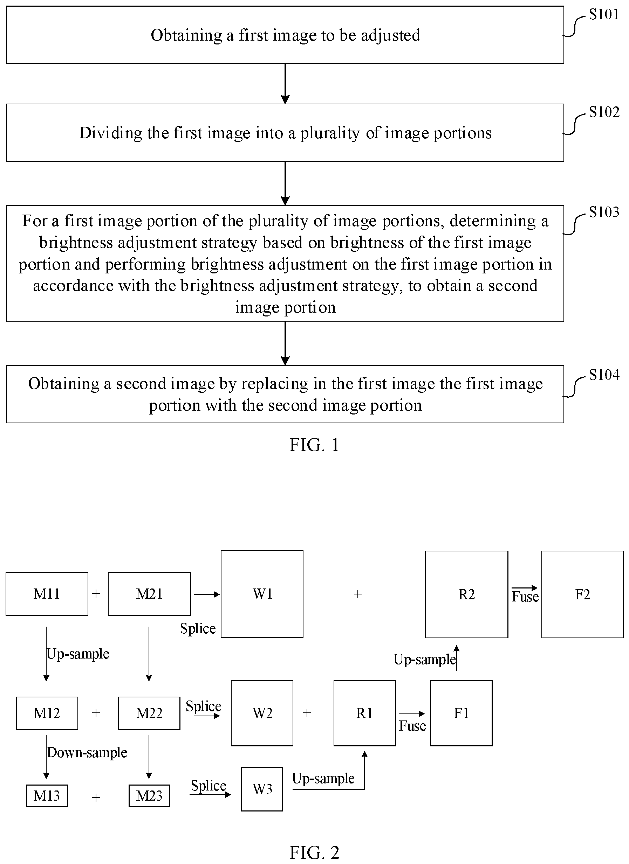

An embodiment of the present disclosure provides a method for adjusting image brightness, which can be executed by a terminal device. The electronic device can be a mobile phone, a tablet computer, a desktop computer, a laptop, etc., or can be a server. FIG. 1 is a flowchart illustrating a method for adjusting image brightness according to an embodiment of the present disclosure. As illustrated in FIG. 1, the method includes operations at block S101 to block S104.

In block S 101, a first image to be adjusted is obtained.

Here, the first image to be adjusted may be an image taken by a camera, or an image downloaded from the network or stored locally, etc., and may also be an image adjusted from an obtained initial image, the adjustment including brightness adjustment.

In block S 102, the first image is divided into a plurality of image portions.

In an embodiment of the present disclosure, the manner of dividing the first image is not limited. The image can be divided equally in terms of area to obtain the image portions. For example, the first image is divided equally into four image portions, each having an equal area. It is also possible to unevenly divide the first image into the image portions. For example, the first image is unevenly divided into a character image portion, a vehicle image portion, a background image portion, and the like according to a person, a vehicle, a background, etc.

In block S103, for a first image portion of the plurality of image portions, a brightness adjustment strategy is determined based on brightness of the first image portion, and brightness adjustment is performed on the first image portion based on the brightness adjustment strategy, to obtain a second image portion.

Here, at least one first image portion is provided. That is, at least one image portion of the plurality of image portions may be taken as the first image portion. For each first image portion, the brightness adjustment strategy is determined based on the brightness of the first image portion, and the brightness adjustment is performed on the first image portion based on the brightness adjustment strategy, to obtain the second image portion corresponding to the first image portion.

In a possible implementation, each image portion may be treated as a first image portion. For each first image portion, the brightness adjustment is performed on the first image portion for the corresponding second image portion.

The brightness adjustment strategy may be determined on the basis of the brightness of the first image portion. When the brightness of the first image portion is small, indicating that the first image portion is dark, the brightness adjustment strategy may be to adjust the brightness of the first image portion higher; when the brightness of the first image portion is large, indicating that the first image portion is bright, the brightness adjustment strategy may be to adjust the brightness of the first image portion lower.

In block S103, the operation of determining the brightness adjustment strategy based on the brightness of the first image portion and performing the brightness adjustment on the first image portion based on the brightness adjustment strategy may specifically include: determining brightness adjustment information for each pixel in the first image portion based on overall brightness of the first image portion; and adjusting brightness of each pixel in the first image portion according to the brightness adjustment information of the pixel in the first image portion.

The brightness of the first image portion includes the overall brightness of the first image portion. The overall brightness of the first image portion is information that may represent a brightness condition of the entire first image portion. For example, the overall brightness of the first image portion may be the brightness of each pixel in the first image portion. For another example, the overall brightness of the first image portion may be a brightness value of the first image portion.

Here, how the brightness value of the first image portion is calculated is not limited. For example, it is possible to calculate a brightness average value of pixels by using a brightness value of each pixel in the first image portion and to use the brightness average value of the pixels as the brightness value of the first image portion; or to determine pixels in the first image portion whose brightness value is within a predetermined brightness region, calculate the brightness average value using the brightness values of the determined pixels, and take the brightness average value as the brightness value of the first image portion.

In practical application, the brightness adjustment strategy may include the brightness adjustment information for each pixel in the first image portion. For any pixel, the brightness adjustment information of the pixel may be a brightness adjustment value. The brightness adjustment value of each pixel may be the same or different. The embodiment of the present disclosure is not limited to this.

Here, when the brightness adjustment is performed on the first image portion according to the brightness adjustment strategy, and the first image portion is dark, it can be determined that the brightness adjustment information for each pixel in the first image portion is a positive value, and the brightness value of each pixel in the first image portion is adjusted based on the brightness adjustment information for each pixel, so that the brightness value of each pixel in the first image portion increases at this time, thereby increasing the brightness value of the first image portion, i.e., improving the brightness of the first image portion; when the first image portion is bright, it can be determined that the brightness adjustment information for each pixel in the first image portion is a negative value, and the brightness value of each pixel in the first image portion is adjusted based on the brightness adjustment information for each pixel, so that the brightness value of each pixel in the first image portion decreases at this time, thereby decreasing the brightness value of the first image portion, i.e. decreasing the brightness of the first image portion.

In a possible implementation, a mapping relationship between a brightness value interval and the brightness adjustment value of the pixel may be preset. For example, a mapping relationship between the brightness value interval [0, 20) and the brightness adjustment value 30 and a mapping relationship between the brightness value interval [ 20, 40) and the brightness adjustment value 20 may be preset.

In practical application, when the brightness of any pixel in the first image portion is adjusted, a brightness value interval where the brightness value of the first image portion is located may be determined first, then the brightness adjustment value of the pixel in the first image portion is determined based on the preset mapping relationship between the brightness value interval and the brightness adjustment value, and the brightness value of the pixel in the first image portion is adjusted in accordance with the brightness adjustment value of the pixel in the first image portion.

In block S 104, a second image is obtained by replacing, in the first image, the first image portion with the second image portion.

In an embodiment of the present disclosure, the first image portion may be replaced with the second image portion in the first image, i.e., the second image portion is spliced with image portions other than the first image portion in the plurality of image portions to obtain the second image. The second image portion is an image portion after brightness adjustment, the other image portions are image portions that are not subjected to brightness adjustment. The second image portion is different from the first image portion only in the image brightness.

The method for adjusting image brightness is provided according to the embodiment of the present disclosure. Compared with the related art, in the embodiment of the present disclosure, the first image is first divided into the plurality of image portions; for the first image portion of the plurality of image portions, the brightness adjustment strategy is determined based on the brightness of the first image portion and the brightness adjustment is performed on the first image portion based on the brightness adjustment strategy, to obtain the second image portion; and then the second image is obtained by replacing, in the first image, the first image portion with the second image portion. As such, the brightness adjustment performed on the first image portion is realized based on the brightness of the first image portion in the image, which improves image quality of the first image portion and ensures that image quality of image portions in the image other than the first image portion remains unchanged, thereby ensuring quality of the image as a whole and improving user experience.

In another possible implementation of an embodiment of the present disclosure, all pixels in the first image portion correspond to the same brightness adjustment information.

In an embodiment of the present disclosure, all pixels in the first image portion correspond to the same brightness adjustment value, i.e., all pixels in the first image portion have the same brightness adjustment value. Accordingly, when the brightness of each pixel in the first image portion is adjusted in accordance with the brightness adjustment information for each pixel in the first image portion, the brightness of all pixels in the first image portion increases or decreases by the same brightness adjustment value.

In an embodiment of the present disclosure, all pixels in the first image portion have the same brightness adjustment value, which may ensure that the brightness of all pixels in the first image portion is increased or reduced by the same brightness adjustment value, thereby ensuring that a contrast of the adjusted first image portion is the same as a contrast of the first image portion before adjustment, and improving the quality of the first image portion, thereby improving the quality of the image as a whole and the user experience.

In another possible implementation of an embodiment of the present disclosure, the operation of determining the brightness adjustment information for each pixel in the first image portion based on the overall brightness of the first image portion may specifically include: obtaining the brightness of each pixel in the first image portion; for any one of pixels in the first image portion, determining brightness adjustment information of the pixel based on brightness of the pixel and the overall brightness of the first image portion, the brightness adjustment information of the pixel being proportional to the brightness of the pixel.

In an embodiment of the present disclosure, first adjustment information for each pixel in the first image portion may be determined based on the overall brightness of the first image portion. The first adjustment information for each pixel corresponds to the same brightness adjustment information. Moreover, second adjustment information for each pixel in the first image portion may be determined based on the brightness of each pixel in the first image portion. The second adjustment information of any pixel is proportional to a magnitude of the brightness of that pixel, i.e., the greater the brightness of the pixel, the greater the second adjustment information of the pixel. Then, a sum of the first adjustment information for each pixel and the second adjustment information for each pixel is used as the brightness adjustment information for each pixel. In this case, the brightness of the pixel in the first image portion is proportional to the brightness adjustment information of the pixel in the first image portion, i.e., the greater the brightness of the pixel in the first image portion, the greater the brightness adjustment information of the pixel.

Alternatively, the brightness adjustment information for the pixel may also be directly determined based on the brightness of the pixel and the overall brightness of the first image portion. The brightness of the pixel in the first image portion is proportional to the brightness adjustment information of the pixel in the first image portion, i.e., the greater the brightness of the pixel in the first image portion, the greater the brightness adjustment information of the pixel.

In the embodiment of the present disclosure, the greater the brightness of the pixel in the first image portion, the greater the brightness adjustment information of the pixel, which may ensure that the brightness adjustment information of the pixel having large brightness in the first image portion is greater than the brightness adjustment information of the pixel having small brightness, ensuring that the contrast of the adjusted first image portion is greater than a contrast of an original first image portion, and improving the quality of the first image portion, thereby improving the quality of the image as a whole and the user experience.

In another possible implementation of an embodiment of the present disclosure, the method further includes, prior to block S101 of obtaining the first image to be adjusted: obtaining an initial image to be adjusted; and performing brightness adjustment on the initial image based on overall brightness of the initial image, to obtain the first image.

The manner of obtaining the initial image to be adjusted is not limited. The initial image may be an image photographed by the camera, downloaded from the network, or locally stored, etc.

The overall brightness of the initial image is information that may represent the brightness condition of the entire initial image. For example, the overall brightness of the initial image may be the brightness of each pixel in the initial image. For another example, the overall brightness of the initial image may be the brightness value of the initial image.

When the brightness adjustment is performed on the initial image according to the overall brightness of the initial image, the overall brightness of the initial image may be increased when the overall brightness of the initial image is dark; the overall brightness of the initial image may be reduced when the overall brightness of the initial image is bright. The initial image after brightness adjustment may be used as the first image, and the brightness adjustment is performed on the first image portion in the first image according to the manner of block S 101 to block S104 in the embodiments of the present disclosure. As such, it realizes that the overall brightness of the image is first adjusted to a suitable value, and then the brightness of a partial region of the image is adjusted, which improves the image quality of image portions in the image other than the first image portion while improving the image quality of this first image portion, thus ensuring the quality of the image as a whole and improving the user experience.

In another possible implementation of an embodiment of the present disclosure, block S102 of dividing the first image into the plurality of image portions may specifically include: dividing the first image into the plurality of image portions according to at least one of brightness of each pixel in the image, a position of each pixel in the image, and an image recognized object.

In an embodiment of the present disclosure, the first image may be divided according to the brightness value of each pixel in the image. In some embodiments, the brightness values may be divided into a plurality of brightness value intervals evenly or unevenly in advance, and then pixels in the first image whose brightness values belong to the same brightness value interval are divided together based on the pre-divided brightness value intervals, thereby obtaining individual image portions.

Certainly, it is also possible to divide the first image according to the positions of the pixels in the image, such as dividing pixels of the first image on the left side into pixels in one image portion and dividing pixels of the first image on the right side into pixels in another image portion, i.e., dividing the first image into two image portions including the image portion on the left side and the image portion on the right side.

The first image may also be divided according to image recognized objects, which may be objects such as a person, a vehicle, a tree, a forest, a cloud, a beach, etc. The image recognized objects may include at least one object. For example, the image recognized object may be a person and a vehicle.

In another possible implementation of an embodiment of the present disclosure, block S104 of obtaining a second image by replacing, in the first image, the first image portion with the second image portion may specifically include block S1041 to block S1044. For ease of understanding and description, the following embodiments will be described in conjunction with FIG. 2. FIG. 2 is a schematic diagram of splicing image portions according to an embodiment of the present disclosure. Details are as follows.

In block S1041, the second image portion and image portions in the first image other than the first image portion are taken as images to be spliced.

For the first image portion in the first image, the first image portion after brightness adjustment, i.e., the second image portion, may be used as an image to be spliced; for any image portions in the first image other than the first image portion, the image portions may be used as other images to be spliced.

In block S1042, images in different resolutions are obtained. The images in different resolutions include the images to be spliced and images obtained by down-sampling the images to be spliced.

At least one down-sampling processing is performed for the images to be spliced separately, to obtain at least one down-sampled image corresponding to each of the images to be spliced. The down-sampled images are the images obtained by down-sampling the images to be spliced.

In an embodiment of the present disclosure, for the images to be spliced, at least one down-sampling processing is performed on each image to be spliced, to obtain at least one down-sampled image corresponding to the image to be spliced. The number of times of down-sampling processing corresponding to each image to be spliced is the same.

As illustrated in FIG. 2, M11 and M21 are two images to be spliced, respectively. M11 may be subjected to down-sampling processing twice to obtain two down-sampled images corresponding to M11, which are M12 and M13, respectively; M21 may be subjected to down-sampling processing twice to obtain two down-sampled images corresponding to M21, which are M22 and M23, respectively.

In block S1043, a spliced image corresponding to each resolution is obtained by splicing images in the resolution.

In an embodiment of the present disclosure, the images to be spliced have the same resolution. After the Nth down-sampling processing is performed on each image to be spliced, the resolution of the down-sampled image corresponding to each image to be spliced is also the same, where N is a positive integer.

As illustrated in FIG. 2, M11 and M21 have the same resolution. M11 and M21 are subjected to down-sampling processing once to obtain the down-sampled image M12 and the down-sampled image M22 that have the same resolution. M11 and M21 are subjected to down-sampling processing twice to obtain the down-sampled image M13 and the down-sampled image M23 that have the same resolution.

In an actual execution process, images of the images to be spliced corresponding to the same resolution may be spliced to each other, to obtain at least two spliced images. Each spliced image and the first image only have a difference in resolution and brightness.

When images of the images to be spliced corresponding to the same resolution are spliced, the images to be spliced can be spliced (the resolution of each image to be spliced is the same), and the down-sampled images corresponding to the images to be spliced corresponding to the same resolution are spliced.

As illustrated in FIG. 2, the image to be spliced M11 and the image to be spliced M21 can be spliced to obtain the spliced image W1. The down-sampled image M12 and the down-sampled image M22 are spliced to obtain the spliced image W2. The down-sampled M13 and the down-sampled M23 are spliced to obtain the spliced image W3.

In block S1044, the second image is obtained by fusing the spliced images corresponding to individual resolutions.

In an embodiment of the present disclosure, the spliced images corresponding to individual resolutions may be fused to obtain the second image. For example, the spliced image W1, the spliced image W2, and the spliced image W3 in FIG. 2 are fused to obtain the second image A.

In some embodiments, block S1044 of obtaining the second image by fusing the spliced images corresponding to individual resolutions may specifically include: obtaining a fusion image by determining a spliced image in the lowest resolution as a current image and performing a fusion operation; and repeatedly performing the fusion operation by using the fusion image as the current image until a resolution of the fusion image is equal to the highest resolution. The fusion operation includes: performing up-sampling on the current image to obtain an up-sampled image, the up-sampled image having a resolution equal to a resolution of an adjacent image of the current image, and the adjacent image being a spliced image with a resolution greater than and having a minimum difference from a resolution of the current image; and obtaining the fusion image by fusing the up-sampled image with the adjacent image.

As illustrated in FIG. 2, the resolution of the spliced image W1 > the resolution of the spliced image W2 > the resolution of the spliced image W3, so the spliced image W3 having the lowest resolution is used as the current image, and the fusion operation is performed to obtain the fusion image F1. Since the resolution of the fusion image F1 is smaller than the maximum resolution, the fusion image F1 is re-used as the current image, and the fusion operation is performed to obtain the fusion image F2. Since the resolution of the fusion image F2 is equal to the maximum resolution, the fusion image F2 is the second image. That is, according to the sequence of the spliced image W3, the spliced image W2, to the spliced image W1, the fusion operation is repeatedly performed until the resolution of the fusion image is equal to the maximum resolution, and the maximum resolution is the resolution of the spliced image W1.

In some embodiments, the spliced image W3 is used as the current image, and the current image W3 is up-sampled to obtain an up-sampled image R1. The resolution of the up-sampled image R1 is equal to the resolution of the spliced image W2. The spliced image W2 is an adjacent image of the current image W3. The up-sampled image R1 and the adjacent image W2 of the current image W3 are fused to obtain a fusion image F1.

Since the resolution of the fusion image F1 is the same as the resolution of the spliced image W2, and the resolution of the fusion image F1 is not equal to the resolution of the spliced image W1, i.e., the resolution of the fusion image F1 is not equal to the maximum resolution, the fusion image F1 is used as the current image. The current image F1 is up-sampled to obtain the up-sampled image R2, the resolution of the up-sampled image R2 is equal to the resolution of the spliced image W1, and the spliced image W1 is the adjacent image of the current image F1. The up-sampled image R 2 is fused with the adj acent image W1 of the current image F1 to obtain a fusion image F 2.

Since the resolution of the fusion image F2 is equal to the resolution of the spliced image W1, i.e., the resolution of the fusion image F2 is equal to the maximum resolution, the fusion image F2 is used as the second image, i.e., the second image F2.

The above describes the method for generating the music poster in detail from the perspective of method steps, and an apparatus for adjusting image brightness is described below from the perspective of virtual modules. Details are as follows.

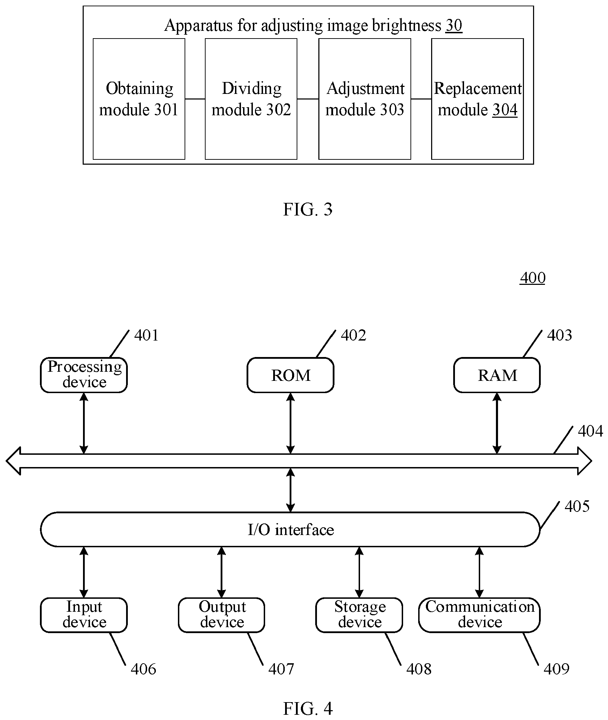

An embodiment of the present disclosure provides an apparatus for adjusting image brightness. As illustrated in FIG. 3, the apparatus 30 for adjusting image brightness may include an obtaining module 301, a dividing module 302, an adjustment module 303, and a replacement module 304.

The obtaining module 301 is configured to obtain a first image to be adjusted.

The dividing module 302 is configured to divide the first image into a plurality of image portions.

The adjustment module 303 is configured to determine, for a first image portion of the plurality of image portions, a brightness adjustment strategy based on brightness of the first image portion and perform brightness adjustment on the first image portion based on the brightness adjustment strategy, to obtain a second image portion.

The replacement module 304 is configured to obtain a second image by replacing, in the first image, the first image portion with the second image portion.

In another possible implementation of an embodiment of the present disclosure, the adjustment module 303 is specifically configured to: determine brightness adjustment information for each pixel in the first image portion based on overall brightness of the first image portion; and adjust brightness of each pixel in the first image portion according to the brightness adjustment information of the pixel in the first image portion.

In another possible implementation of an embodiment of the present disclosure, all pixels in the first image portion correspond to the same brightness adjustment information.

In another possible implementation of an embodiment of the present disclosure, when determining the brightness adjustment information for each pixel in the first image portion based on the overall brightness of the first image portion, the adjustment module 303 is specifically configured to: obtain the brightness of each pixel in the first image portion; for any one of pixels in the first image portion, determine brightness adjustment information of the pixel based on brightness of the pixel and the overall brightness of the first image portion, the brightness adjustment information of the pixel being proportional to the brightness of the pixel.

In another possible implementation of an embodiment of the present disclosure, the adjustment module is further configured to: obtain an initial image to be adjusted; and perform brightness adjustment on the initial image based on overall brightness of the initial image, to obtain the first image.

In another possible implementation of an embodiment of the present disclosure, the dividing module 302 is specifically configured to divide the first image into the plurality of image portions according to at least one of brightness of each pixel in the image, a position of each pixel in the image, and an image recognized object.

In another possible implementation of an embodiment of the present disclosure, the replacement module 304 is specifically configured to: take the second image portion and image portions in the first image other than the first image portion as images to be spliced; obtain images in different resolutions, the images in different resolutions including the images to be spliced and images obtained by down-sampling the images to be spliced; obtain a spliced image corresponding to each resolution by splicing images in the resolution; and obtain the second image by fusing the spliced images corresponding to individual resolutions.

In another possible implementation of an embodiment of the present disclosure, when obtaining the second image by fusing the spliced images corresponding to individual resolutions, the replacement module 304 is specifically configured to: obtain a fusion image by determining a spliced image in the lowest resolution as a current image and performing a fusion operation; and re-take the fusion image as the current image and repeatedly performing the fusion operation until a resolution of the fusion image is equal to the highest resolution. The fusion operation includes: performing up-sampling on the current image to obtain an up-sampled image, the up-sampled image having a resolution equal to a resolution of an adjacent image of the current image, and the adjacent image being a spliced image with a resolution greater than and having a minimum difference from a resolution of the current image; obtaining the fusion image by fusing the up-sampled image with the adjacent image.

The apparatus for adjusting image brightness according to the embodiment can implement the method for adjusting image brightness according to the first embodiment of the present disclosure. Implementation principles of the apparatus are similar to those of the method, which are not described in detail herein.

The apparatus for adjusting image brightness is provided according to the embodiment of the present disclosure. Compared with the related art, in the embodiment of the present disclosure, the first image is first divided into the plurality of image portions; for the first image portion of the plurality of image portions, the brightness adjustment strategy is determined based on the brightness of the first image portion and the brightness adjustment is performed on the first image portion based on the brightness adjustment strategy, to obtain the second image portion; and then the second image is obtained by replacing, in the first image, the first image portion with the second image portion. As such, the brightness adjustment performed on the first image portion is realized based on the brightness of the first image portion in the image, which improves the image quality of the first image portion and ensures that the image quality of image portions in the image other than the first image portion remains unchanged, thereby ensuring the quality of the image as a whole and improving the user experience.

The above describes the apparatus for adjusting image brightness of the present disclosure from the perspective of virtual modules, and an electronic device of the present disclosure is described below from the perspective of a physical device.

FIG. 4 is a structural schematic diagram of an electronic device 400 (e.g., the terminal device or the server) adapted to implement the embodiments of the present disclosure. The terminal device according to the embodiment of the present disclosure may include, but not limited to, a mobile terminal such as a mobile phone, a laptop computer, a digital broadcast receiver, a Personal Digital Assistant (PDA), a tablet computer or PAD, a Portable Multimedia Player (PMP), or a vehicle-mounted terminal (e.g., a vehicle-mounted navigation terminal), or a fixed terminal such as a digital TV, a desktop computer, etc. The electronic device illustrated in FIG. 4 is exemplary only, and should not be construed as limiting the function and scope of use of the embodiments of the present disclosure.

The electronic device includes a memory and a processor. The processor herein may be referred to as a processing device 401 hereinafter, and the memory may include at least one of a Read Only Memory (ROM) 402, a Random Access Memory (RAM) 403, and a storage device 408, which are described in detail as follows.

As illustrated in FIG. 4, the electronic device 400 may include a processing device 401 (e.g., a central processing unit, a graphics processor, etc.), which may perform various appropriate actions and processes in accordance with programs stored in an ROM 402 or loaded from a storage device 408 into an RAM 403. Various programs and data required for operation of the electronic device 400 may also be stored on the RAM 403. The processing device 401, the ROM 402, and the RAM 403 are connected to each other through a bus 404. An input/output (I/O) interface 405 is also connected to bus 404.

Generally, the following devices may be connected to the I/O interface 405: input devices 406 including, for example, a touch screen, a touch pad, a keyboard, a mouse, a camera, a microphone, an accelerometer, a gyroscope, etc.; an output device 407 including, for example, a Liquid Crystal Display (LCD), a speaker, a vibrator, and the like; a storage device 408 including, for example, magnetic tape, hard disk, etc.; and a communication device 409. The communication device 409 may allow the electronic apparatus 400 to perform wireless or wired communication with other devices for data exchange. Although FIG. 4 illustrates the electronic device 400 having various means, it can be appreciated that it is not necessary to implement or provide all the illustrated devices. Alternatively, more or fewer devices may be implemented or provided.

In particular, according to an embodiment of the present disclosure, the processes described above with reference to the flowcharts may be implemented as computer software programs. For example, an embodiment of the present disclosure includes a computer program product, which includes a computer program carried on a computer-readable medium. The computer program includes program codes for implementing the method illustrated in any of the flowcharts. In these embodiments, the computer program may be downloaded and installed from a network through the communication device 409, or installed from the storage device 406, or installed from the ROM 402. When the computer program is executed by the processing device 401, the above-mentioned functions defined in the method for updating the page display according to the embodiments of the present disclosure are performed.

It is to be noted that the above computer-readable medium in the present disclosure may be a computer-readable signal medium or a computer-readable storage medium or any combination thereof. The computer-readable storage medium may be, but not limited to, for example, an electrical, magnetic, optical, electromagnetic, infrared, or semiconductor system, apparatus, or device, or any combination thereof. More specific examples of the computer-readable storage medium may include, but not limited to: an electrical connection having one or more wires, a portable computer disk, a hard disk, a Random Access Memory (RAM), a Read Only Memory (ROM), an Erasable Programmable Read Only Memory (EPROM) or a flash memory, an optical fiber, a Compact Disc Read-Only Memory (CD-ROM), an optical memory device, a magnetic memory device, or any suitable combination thereof. In the present disclosure, the computer-readable storage medium may be any tangible medium including or storing programs, which may be used by or used with an instruction execution system, apparatus, or device. However, in the present disclosure, the computer-readable signal medium may include a data signal propagated in a baseband or as a part of a carrier that carries computer-readable program codes. Such propagated data signal may be in various forms, including but not limited to an electromagnetic signal, an optical signal, or any suitable combination thereof. The computer-readable signal medium may be any computer-readable medium other than the computer-readable storage medium, which may transmit, propagate, or transfer programs used by or used with an instruction execution system, apparatus or device. The program codes contained on the computer-readable medium may be transmitted via any appropriate medium, including but not limited to electric cable, optical cable, Radio Frequency (RF), or any suitable combination thereof.

In some embodiments, the client and the server may communicate using any currently known or future-developed network protocol, such as HTTP (HyperText Transfer Protocol), and may be in communication interconnection with digital data in any form or medium (e.g., a communication network). Examples of communication networks include a Local Area Network ("LAN"), a Wide Area Network ("WAN"), the Internet work (e.g., the Internet), and an end-to-end network (e.g., ad hoc end-to-end network), as well as any currently known or future-developed network.

The above-mentioned computer readable medium may be contained in the above-mentioned electronic device, or it may be separated and not assembled into the electronic device.

The above-mentioned computer readable medium carries one or more programs which, when executed by the electronic device, cause the electronic device to: obtain a first image to be adjusted; divide the first image into a plurality of image portions; for a first image portion of the plurality of image portions, determine a brightness adjustment strategy based on brightness of the first image portion and perform brightness adjustment on the first image portion based on the brightness adjustment strategy, to obtain a second image portion; and obtain a second image by replacing, in the first image, the first image portion with the second image portion.

The computer program codes for implementing the operations according to the embodiments of the present disclosure may be written in one or more programming languages or any combination thereof. The programming languages may include object-oriented programming languages, such as Java, Smalltalk, or C++, as well as conventional procedureoriented programming languages, such as "C" language or similar programming languages. The program codes may be executed completely on a user computer, partly on the user computer, as a standalone software package, partly on the user computer and partly on a remote computer, or completely on the remote computer or server. In a case where the remote computer is involved, the remote computer may be connected to the user computer through any types of network, including a Local Area Network (LAN) or a Wide Area Network (WAN), or to an external computer (e.g., over the Internet by using an Internet service provider).

The flowcharts and block diagrams in the accompanying drawings illustrate architectures, functions, and operations of possible implementations of systems, methods, and computer program products according to various embodiments of the present disclosure. In this regard, each block in the flowcharts or block diagrams may represent a module, a program segment, or a part of codes. The module, program segment, or part of codes may contain one or more executable instructions for implementing a specified logical function. It should also be noted that, in some alternative implementations, the functions showed in blocks may occur in an order other than the order illustrated in the drawings. For example, two blocks illustrated in succession may actually be executed substantially in parallel with each other, or sometimes even in a reverse order, depending on functions involved. It should also be noted that each block in the block diagrams and/or flowcharts, or any combination of the blocks in the block diagrams and/or flowcharts, may be implemented using a dedicated hardware-based system configured to perform specified functions or operations or may be implemented using a combination of dedicated hardware and computer instructions.

The modules or units described in the embodiments of the present disclosure may be embodied as software or hardware. Here, names of the modules or units do not constitute a limitation on the modules or units the under certain circumstances. For example, the obtaining module can also be described as a "module configured to obtain a first image to be adjusted".

The functions described herein above may be performed, at least in part, by one or more hardware logic components. For example, without limitation, exemplary types of suitable hardware logic components include a Field Programmable Gate Array (FPGA), an Application Specific Integrated Circuit (ASIC), an Application Specific Standard Product (ASSP), a System on Chip (SOC), a Complex Programmable Logic Device (CPLD), and the like.

In the context of this disclosure, a machine-readable medium may be a tangible medium, which may contain or store a program for use by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of a machine-readable storage medium would include an electrical connection having one or more wires, a portable computer disk, a hard disk, a Random Access Memory (RAM), a Read Only Memory (ROM), an Erasable Programmable Read Only Memory (EPROM) or flash memory, an optical fiber, a Compact Disc Read Only Memory (CD-ROM), an optical memory device, a magnetic memory device, or any suitable combination thereof.

An embodiment of the present disclosure provides an electronic device. The electronic device according to this embodiment of the present disclosure can include a memory, a processor, and at least one application. The at least one application is stored in the memory and configured to be executed by the processor to achieve, compared with the related art: first dividing the first image into a plurality of image portions; for a first image portion of the plurality of image portions, determining a brightness adjustment strategy based on brightness of the first image portion and performing brightness adjustment on the first image portion based on the brightness adjustment strategy, to obtain a second image portion; and then obtaining a second image by replacing, in the first image, the first image portion with the second image portion. As such, the brightness adjustment performed on the first image portion is realized based on the brightness of the first image portion in the image, which improves the image quality of the first image portion and ensures that the image quality of image portions in the image other than the first image portion remains unchanged, thereby ensuring the quality of the image as a whole and improving the user experience.

The above describes the electronic device of the present disclosure from the perspective of the physical device, and the following describes a computer-readable medium of the present disclosure from the perspective of a medium.

An embodiment of the present disclosure provides a computer-readable medium. The computer-readable medium stores a computer program. The computer program, when executed on a computer, causes the computer to perform corresponding contents in the above method embodiments. Compared with the related art, in the present disclosure, the first image is first divided into the plurality of image portions; for the first image portion of the plurality of image portions, the brightness adjustment strategy is determined based on the brightness of the first image portion and the brightness adjustment is performed on the first image portion based on the brightness adjustment strategy, to obtain the second image portion; and then the second image is obtained by replacing, in the first image, the first image portion with the second image portion. As such, the brightness adjustment performed on the first image portion is realized based on the brightness of the first image portion in the image, which improves the image quality of the first image portion and ensures that the image quality of image portions in the image other than the first image portion remains unchanged, thereby ensuring the quality of the image as a whole and improving the user experience.

According to one or more embodiments of the present disclosure, a method for adjusting image brightness is provided. The method includes: obtaining a first image to be adjusted; dividing the first image into a plurality of image portions; for a first image portion of the plurality of image portions, determining a brightness adjustment strategy based on brightness of the first image portion and performing brightness adjustment on the first image portion based on the brightness adjustment strategy, to obtain a second image portion; and obtaining a second image by replacing, in the first image, the first image portion with the second image portion.

According to one or more embodiments of the present disclosure, the operation of determining the brightness adjustment strategy based on the brightness of the first image portion and performing the brightness adjustment on the first image portion based on the brightness adjustment strategy includes: determining brightness adjustment information for each pixel in the first image portion based on overall brightness of the first image portion; and adjusting brightness of each pixel in the first image portion according to the brightness adjustment information of the pixel in the first image portion.

According to one or more embodiments of the present disclosure, all pixels in the first image portion correspond to the same brightness adjustment information.

According to one or more embodiments of the present disclosure, the operation of determining the brightness adjustment information for each pixel in the first image portion based on the overall brightness of the first image portion includes: obtaining the brightness of each pixel in the first image portion; for any one of pixels in the first image portion, determining brightness adjustment information of the pixel based on brightness of the pixel and the overall brightness of the first image portion, the brightness adjustment information of the pixel being proportional to the brightness of the pixel.

According to one or more embodiments of the present disclosure, the method further includes, prior to obtaining the first image to be adjusted: obtaining an initial image to be adjusted; and performing brightness adjustment on the initial image based on overall brightness of the initial image, to obtain the first image.

According to one or more embodiments of the present disclosure, the operation of dividing the first image into the plurality of image portions includes: dividing the first image into the plurality of image portions according to at least one of brightness of each pixel in the image, a position of each pixel in the image, and an image recognized object.

According to one or more embodiments of the present disclosure, the operation of obtaining the second image by replacing, in the first image, the first image portion with the second image portion includes: determining the second image portion and image portions in the first image other than the first image portion as images to be spliced; obtaining images in different resolutions, the images in different resolutions including the images to be spliced and images obtained by down-sampling the images to be spliced; obtaining a spliced image corresponding to each resolution by splicing images in the resolution; and obtaining the second image by fusing the spliced images corresponding to individual resolutions.

According to one or more embodiments of the present disclosure, the operation of obtaining the second image by fusing the spliced images corresponding to individual resolutions includes: obtaining a fusion image by determining a spliced image in the lowest resolution as a current image and performing a fusion operation; and repeatedly performing the fusion operation by using the fusion image as the current image until a resolution of the fusion image is equal to the highest resolution. The fusion operation includes: performing up-sampling on the current image to obtain an up-sampled image. The up-sampled image has a resolution equal to a resolution of an adjacent image of the current image, and the adjacent image is a spliced image with a resolution greater than and having a minimum difference from a resolution of the current image; obtaining the fusion image by fusing the up-sampled image with the adjacent image.

According to one or more embodiments of the present disclosure, an apparatus for adjusting image brightness is provided. The apparatus includes: an obtaining module configured to obtain a first image to be adjusted; a dividing module configured to divide the first image into a plurality of image portions; an adjustment module configured to determine, for a first image portion of the plurality of image portions, a brightness adjustment strategy based on brightness of the first image portion and perform brightness adjustment on the first image portion based on the brightness adjustment strategy, to obtain a second image portion; and a replacement module configured to obtain a second image by replacing, in the first image, the first image portion with the second image portion.

According to one or more embodiments of the present disclosure, the adjustment module is specifically configured to: determine brightness adjustment information for each pixel in the first image portion based on overall brightness of the first image portion; and adjust brightness of each pixel in the first image portion according to the brightness adjustment information of the pixel in the first image portion.

According to one or more embodiments of the present disclosure, all pixels in the first image portion correspond to the same brightness adjustment information.

According to one or more embodiments of the present disclosure, when determining the brightness adjustment information for each pixel in the first image portion based on the overall brightness of the first image portion, the adjustment module is specifically configured to: obtain the brightness of each pixel in the first image portion; for any one of pixels in the first image portion, determine brightness adjustment information of the pixel based on brightness of the pixel and the overall brightness of the first image portion, the brightness adjustment information of the pixel being proportional to the brightness of the pixel.

According to one or more embodiments of the present disclosure, the adjustment module is further configured to: obtain an initial image to be adjusted; and perform brightness adjustment on the initial image based on overall brightness of the initial image, to obtain the first image.

According to one or more embodiments of the present disclosure, the dividing module is specifically configured to: divide the first image into the plurality of image portions according to at least one of brightness of each pixel in the image, a position of each pixel in the image, and an image recognized object.

According to one or more embodiments of the present disclosure, the replacement module is specifically configured to: take the second image portion and image portions in the first image other than the first image portion as images to be spliced; obtain images in different resolutions, the images in different resolutions including the images to be spliced and images obtained by down-sampling the images to be spliced; obtain a spliced image corresponding to each resolution by splicing images in the resolution; and obtain the second image by fusing the spliced images corresponding to individual resolutions.

According to one or more embodiments of the present disclosure, when obtaining the second image by fusing the spliced images corresponding to individual resolutions, the replacement module is specifically configured to: obtain a fusion image by determining a spliced image in the lowest resolution as a current image and performing a fusion operation; and re-take the fusion image as the current image and repeatedly perform the fusion operation until a resolution of the fusion image is equal to the highest resolution. The fusion operation includes: performing up-sampling on the current image to obtain an up-sampled image, the up-sampled image having a resolution equal to a resolution of an adjacent image of the current image, and the adjacent image being a spliced image with a resolution greater than and having a minimum difference from a resolution of the current image; obtaining the fusion image by fusing the up-sampled image with the adjacent image.

According to one or more embodiments of the present disclosure, an electronic device is provided. The electronic device includes one or more processors, a memory, and one or more applications. The one or more applications are stored in the memory and configured to be executed by the one or more processors to perform the method for adjusting image brightness according to the method embodiments.

According to one or more embodiments of the present disclosure, a computer-readable medium is provided. The computer-readable medium stores a computer program. The computer program, when executed by a processor, performs the method for adjusting image brightness according to the method embodiments.

The above description is only intended to explain the preferred embodiments of the present disclosure and the employed principles of the technology. It will be appreciated by those skilled in the art that the scope of the present disclosure herein is not limited to t the technical solutions formed by the specific combination of the above technical features, but should also encompass any other combinations of features described above or equivalents thereof without departing from the above concept of the present disclosure. For example, the above features and the technical features disclosed in the present disclosure having similar functions (but not limited to them) are replaced with each other to form the technical solution.

Further, although the operations are depicted in a specific order, this should not be understood as requiring these operations to be performed in the specific order illustrated or in a sequential order. Under certain circumstances, multitasking and parallel processing may be advantageous. Likewise, although several specific implementation details are included in the above discussion, these should not be construed as limitations on the scope of the present disclosure. Certain features that are described in the context of separate embodiments can also be implemented in combination in a single embodiment. Conversely, various features described in the context of a single embodiment can also be implemented in multiple embodiments separately or in any suitable combination.

Although the subject matter has been described in language specific to structural features and/or logical actions of the method, it should be understood that the subject matter defined in the appended claims is not necessarily limited to the specific features or actions described above. On the contrary, the specific features and actions described above are merely exemplary forms of implementing the claims.

## Claims

1. An image brightness adjustment method, comprising:
obtaining a first image to be adjusted;
dividing the first image into a plurality of image portions;
for a first image portion of the plurality of image portions, determining a brightness adjustment strategy based on brightness of the first image portion and performing brightness adjustment on the first image portion in accordance with the brightness adjustment strategy, to obtain a second image portion; and
obtaining a second image by replacing, in the first image, the first image portion with the second image portion.

2. The method according to claim 1, wherein said determining the brightness adjustment strategy based on the brightness of the first image portion and performing the brightness adjustment on the first image portion in accordance with the brightness adjustment strategy comprises:
determining brightness adjustment information for each pixel in the first image portion based on overall brightness of the first image portion; and
adjusting brightness of each pixel in the first image portion based on the brightness adjustment information of the pixel in the first image portion.

3. The method according to claim 2, wherein all pixels in the first image portion correspond to the same brightness adjustment information.

4. The method according to claim 2, wherein said determining the brightness adjustment information for each pixel in the first image portion based on the overall brightness of the first image portion comprises:
obtaining the brightness of each pixel in the first image portion;
for any one of pixels in the first image portion, determining brightness adjustment information for the pixel based on brightness of the pixel and the overall brightness of the first image portion, the brightness adjustment information for the pixel being proportional to the brightness of the pixel.

5. The method according to claim 1, further comprising, prior to said obtaining the first image to be adjusted:
obtaining an initial image to be adjusted; and
performing brightness adjustment on the initial image based on overall brightness of the initial image, to obtain the first image.

6. The method according to any one of claims 1 to 5, wherein said dividing the first image into the plurality of image portions comprises:
dividing the first image into the plurality of image portions according to at least one of: brightness of each pixel in the image, a position of each pixel in the image, and an image recognized object.

7. The method according to claim 1, wherein said obtaining the second image by replacing, in the first image, the first image portion with the second image portion comprises:
determining the second image portion and image portions in the first image other than the first image portion as images to be spliced;
obtaining images in different resolutions, the images in different resolutions comprising the images to be spliced and images obtained by down-sampling the images to be spliced;
obtaining a spliced image corresponding to each resolution by splicing images in the resolution; and
obtaining the second image by fusing the spliced images corresponding to individual resolutions.

8. The method according to claim 7, wherein said obtaining the second image by fusing the spliced images corresponding to individual resolutions comprises:
obtaining a fusion image by determining a spliced image in the lowest resolution as a current image and performing a fusion operation; and
repeatedly performing the fusion operation by using the fusion image as the current image until a resolution of the fusion image is equal to the highest resolution, wherein
the fusion operation comprises:
performing up-sampling on the current image to obtain an up-sampled image, wherein the up-sampled image has a resolution equal to a resolution of an adjacent image of the current image, and the adjacent image is a spliced image with a resolution greater than and having a minimum difference from a resolution of the current image;
obtaining the fusion image by fusing the up-sampled image with the adjacent image.

9. An apparatus for adjusting image brightness, the apparatus comprising:
an obtaining module configured to obtain a first image to be adjusted;
a dividing module configured to divide the first image into a plurality of image portions;
an adjustment module configured to determine, for a first image portion of the plurality of image portions, a brightness adjustment strategy based on brightness of the first image portion and perform brightness adjustment on the first image portion in accordance with the brightness adjustment strategy, to obtain a second image portion; and
a replacement module configured to obtain a second image by replacing, in the first image, the first image portion with the second image portion.

10. An electronic device, comprising:
one or more processors;
a memory; and
one or more applications,
wherein the one or more applications are stored in the memory and configured to be executed by the one or more processors to perform the image brightness adjustment method according to any one of claims 1 to 8.

11. A computer-readable medium, having a computer program stored thereon, wherein the computer program, when executed by a processor, performs the image brightness adjustment method according to any one of claims 1 to 8.
